# EUROPEAN PATENT SPECIFICATION

(11) **EP 2 127 341 B1**
(45) Date of publication and mention of the grant of the patent: **17.04.2013**
(21) Application number: 07804351.0
(22) Date of filing: 21.09.2007
(51) Int. Cl.: H04M 1/725, G06T 13/40, H04M 1/57

(54) **A COMMUNICATION NETWORK AND DEVICES FOR TEXT TO SPEECH AND TEXT TO FACIAL ANIMATION CONVERSION**
KOMMUNIKATIONSNETZ UND EINRICHTUNGEN ZUR UMSETZUNG VON TEXT IN SPRACHE UND TEXT IN GESICHTSBEWEGUNGEN
RÉSEAU DE COMMUNICATION ET DISPOSITIFS DE CONVERSION TEXTE/PAROLE ET TEXTE/ANIMATION FACIALE

(30) Priority: 05.02.2007 GB 0702150
(43) Date of publication of application: 02.12.2009
(73) Proprietor: Amegoworld Ltd, Cheshire SK10 3LU (GB)
(72) Inventor: STOREY, John, Cheshire SK10 3LU (GB); CROSS, Robert, Cheshire SK10 3LU (GB)
(74) Representative: Tranter, Andrew David
(86) International application number: PCT/GB2007/003584
(87) International publication number: WO 2008/096099

(56) References cited:
- WO-A-02/13144
- WO-A-02/31775
- WO-A-02/080107
- DE-A1-102004 063 553
- GB-A- 2 406 470
- SHIGEO MORISHIMA ET AL: "A FACIAL MOTION SYNTHESIS FOR INTELLIGENT MAN-MACHINE INTERFACE" SYSTEMS & COMPUTERS IN JAPAN, WILEY, HOBOKEN, NJ, US, vol. 22, no. 5, January 1991 (1991-01), pages 50-59, XP000240754 ISSN: 0882-1666

## Description

This invention relates to communication networks, and to a device for use in sending and receiving messages across a communication network. It also relates to a novel method of presenting a message to a user and to a data structure encoding information which can be used to present an image of a face associated with a sender of a message to a reader of the message.

At present, there are many different communication networks that are widely used to enable personal communication over long distances. Traditionally the only form of communication was to send a letter or use a telephone but the latest trend has seen advances in instant or near instant written communication. Examples of such forms of communication are emails and text messages (or more correctly SMS or MMS messages).

In the case of emails and text messages a sender types a message into a sender device, such as a mobile phone or personal computer. The message is then sent across an electronic network to a receiver device. A user can then pick up the sent message and display the text on a display screen associated with the device.

Whilst these have proven very popular, especially with younger users, it has for some time been felt that these messages can be misinterpreted because they lack any way of expressing the emotions of the sender. They are also somewhat impersonal and difficult to read by users who have a visual impairment.

One partial solution to this problem has been to develop a system of symbols, known as emoticons, which can be included in a typed message. These symbols represent expressions and help a reader determine the emotions intended to be expressed by a sender. For example, a "smiley" face can be inserted to show that the sender is happy.

It is an object of at least one aspect of the present invention to at least partially ameliorate the problem of including expression or other forms of personalisation in a typed message sent across a communication network such as a text message, email or instant message.

WO/02 080107 discloses a system in which a receiving device displays an animated image of a face which appears to read out an incoming textual message. The facial image is a flat two dimensional image which products a very unnatural effect.

WO 02/31775 discloses a method of animating a 3-D model of a persons head. The head is modeled as a series of nodes connector in a triangular mesh, and the nodes are moved to create animation. Such a model is complex and cannot provide a realistic appearance for hair, which has to be added onto the model, a complex procedure when the head to be displayed has long or unruly hair.

According to a first aspect the invention provides a communication system comprising:
a sending device
a receiving device and
a network which connects the sending device to the receiving device;
in which the sending device comprises:
   at least one user operable input for entering a sequence of textual characters as a message and transmission means for sending the message across the network;
   in which the receiving device comprises:
      a memory which stores a head image;
      receiver means for receiving the message comprising the sequence of textual characters;
      text to speech converting means for converting the text characters of the message into an audio message corresponding to the sequence of text characters;
      animating means for generating an animated partial 3D image of a head from the head image stored in the memory which is associated with the sender of the message; the animating means animating at least one facial feature of the head, the animation corresponding the movements made by the head when reading the message;
      display means for displaying the animated partial 3D head; and loudspeaker means for outputting the audio message in synchronisation with the displayed head,
      and characterised in that the memory stores a plurality of head images, each one being associated with a different sending device and comprising an image of a head viewed from the front including a face, hair and neck portions, and in which the memory further includes a 3D mesh which is defined by a set of interconnected nodes which generally all lie in one plane around a peripheral region of the mesh and nodes within the periphery which are raised above the plane to correspond to facial features, the animating means generating the partial 3D head image by overlaying a head image onto the mesh with facial features of the facial region of the head image aligned with the raised facial features of the mesh and the hair portions overlaying the flat peripheral region of the mesh.

In general, much of the meaning and recognition conveyed in communication between humans is carried by the facial expression and the familiarity of one person with the facial appearance of the other. The representation of facial features in this invention is capable of great accuracy because it can be based on a digital photograph of the user or sender, which is already a good likeness and makes the animated partial 3D image described herein appear to the receiver as a realistic and recognisable representation of the sender of a message.

By performing the conversion of the text message into an animated and spoken message at the receive device there is no additional burden on the network when compared with the transmission and display of a text only message. Additionally, rendering the animated head from images prestored in the memory of the receive device removes the need to send the image with the transmitted message. Additionally, using a partial 3D rather than full 3D rendering reduces further the computational burden.

By partial 3D we mean that the animated displayed head is not a full 3D representation of a head. In a sense it may comprise a 2D image (the head image may be a 2D image such as a picture taken with a camera) which is deformed in places to give it some depth in the Z plane so that facial features protrude out of the 2D plane. Other parts of the image remain 2D. This partial 3D image is a 2D image which is distorted and made to appear 3D. The displayed image may be tilted slightly from left to right by simply changing the orientation of the base plane which can correspond with the periphery of the image. Because the facial features are given depth in the Z-plane, when tilted the image viewed on the display will appear to be truly 3D. The mesh may also be rotated in three planes to make the head appear to tilt to one side or slightly up or down in a nodding motion, or turn from side to side.

This mesh may therefore replicate the 3D topology that would result if a head was pressed into the back of a sheet of elastic material that is stretched taut across a frame. The material will be pushed forward by features of the face such as the nose and eyebrows and lips, yet remain in the same plane outside of the facial region.

This 3D mesh which is raised in regions of facial features but is flat outside of those regions allows for a head image which includes hair or other features beyond the outline of the face to be simply mapped onto the mesh. This is much simpler than producing a full 3D model and gives excellent results in terms of the realism achieved. With a 3D model, realistic presentation of hair is impossible to achieve. The raised features of the face allow the head image to be rotated slightly in three planes during animation and give the appearance of being truly 3D even though it is only partial 3D.

The mesh may have a generally rectangular outline to suit the rectangular outline of a typical rectangular display screen. This allows the animated image to be expanded to fill a display screen if desired.

Only a single mesh is stored in the memory of the receive device for use in rendering the animated head from any sender whose head image is stored in the receiver device. This reduces the amount of memory needed to provide an animated head image compared with storing many meshes, perhaps even one per head image. Of course, more than one mesh could be stored if desired.

The mesh may be modelled with a plurality of links connected to the nodes which mimic the attachment of a face to the bones of a skull, movement of the "bones" causing movement of the nodes relative to one another in the mesh to create animation.

A separate animation of the mesh may be stored for animating each speech phoneme.

A stored head image may comprise a photograph, such as a digital photograph, or other 2D image of a head (photographic or stylised) when viewed from the front. It may typically be a photograph of the senders head. The image may be sized such that the face is a set size that will match the size of the face in the 3D mesh. This can be achieved from any photo by cropping or zooming the image as required. For maximum realism the image should include a region around the face showing the hair and neck portions that will lie on the flat part of the 3D mesh.

The photograph may therefore be edited before use, perhaps to enhance or disguise a feature of the senders face. Alternatively it may be any photograph of a persons head/face such as an actor/actress or singer or other celebrity. This could be captured by a digital camera, or using a digital scanner. A sender can then choose to associate themselves with this head image.

Associated with each head image in the memory may be one or more co-ordinates which define the location on the mesh of a facial feature that is to be animated. This may, obviously, be the location of a mouth. Co-ordinates of other features that may be animated may also be stored. This may include eyes and eyebrows.

The memory may store one or more facial features that may be animated such as a mouth, eyes, eyebrows etc. Where more than one version of each feature is provided, for example two or more different eye socket shapes, a parameter may be associated with each head image to indicate which of the features is to be used in the animation.

Additionally the head image may be associated with an identifier which indicates the identity of a sender of a message associated with that face image.

A head image, coordinates and identifier may be grouped as a single data structure. This can then be easily transmitted from one device to another whenever the devices are connected on the network for the first time. Typically the data will be transmitted via a server or other intermediary.

The transmitting device may transmit the identifier along with the message or as part of the message. In its simplest form, the identifier may comprise the unique network address (IP address, phone number etc) of the transmitter device. This identifier can then be matched to the correct head image at the receiver device.

The head image may be stored on the receive device prior to receipt of a message as part of an initial set-up process when it is first intended to receive a message from a new user. This process could be initiated by the receive device requesting a head image which is then sent by the transmitter. Alternatively it may be initiated by the person who wants to send a message to a receiver device for the first time.

Importantly the transmission of the head image does not happen again after initial set-up. This again means that no additional data needs to be sent with the text message. Of course, if the head image has changed it could be re-sent in its changed form if required, but if it does not change it need only ever be sent the one time during initial set up.

The converting means may include a dictionary which is stored in a memory of the receiving device which lists phonemes for different sequences of textual characters.

Where a dictionary is provided, it may include comparison means for comparing text in the message to words or sounds in the dictionary to construct the audio message.

The dictionary may also store, for one or more sounds (preferably for each and every sound) that will make up the audio message, an animation of a facial feature that corresponds to that sound which will be displayed by the animation means. This may comprise an animated mouth but may also include a pair of animated eyes or other feature such as eyebrows.

An alternative to the dictionary, which is more preferred, is to use a rule based text to speech conversion schema. This may be implemented by providing in the memory a set of rules which define the phoneme that is to be used for a given combination or sequence of textual characters. The memory may also include a set of exceptions which indicate sequences of textual characters that do not conform to the rules.

The use of a set of rules results in a more compact implementation of a text to speech converter compared with a full dictionary based system. This is significant where the receiver device comprises a mobile device such as a telephone which has limited available memory compared with a larger desktop computer device. Rules may be provided for more than one language, and it is envisaged that almost any language can be converted from text to speech using a system according to the present invention provided sufficient rules are defined.

The audio message may comprise any audio format which is known in the art and which can be converted to an analogue audio signal by the receiving device. It may comprise a file in the .wav format for example.

The network may comprise a cellular telephone network and the sending device and receiving device may comprise a cellular telephone. It may comprise a fixed telephone network with fixed telephones for the sending and receiving devices. The messages may comprise text messages in the SMS or MMS format or similar.

More preferably the transmitted message may be sent in one of the standard instant messaging data formats such as XMPP and in particular Jabber. This is preferred as the transmission is faster than other mobile protocols such as SMS or MMS and cheaper.

Alternatively the network may comprise an internet or other form of communications network and the devices may comprise any devices which can send data across the internet such as PCIG, PDAs, laptops, tablet PCs, smart phones etc.

The transmission means will vary dependent on which network the device is to be used with. For example, it may comprise an antenna for a GSM phone network, or an antenna of a wi-fi network or a data port for connecting to an internet.

It is beneficial to the sender of the message to know whether the intended recipient is present at his receiving device or absent. Where the sending device is in communication with a messaging server and may be equipped to indicate whether the recipient is on line, not willing to be disturbed, or absent. This enables the sender to choose whether he will be able to conduct a two-way message conversation with the intended recipient or whether he should simply send a one-way message. The server may include a facility to store messages whose intended recipient is absent, and subsequently forward the message when the recipient returns.

The display means may comprise a liquid crystal display which may be monochrome or colour. It should have a refresh rate sufficient to enable the face to be smoothly animated, e.g. greater than 12 frames per second.

The loudspeaker means may comprise a small speaker built in to the device or perhaps a detachable headphone, connected by a hard wire or a wireless link to the device.

It will be understood that all the key features such as display and loudspeaker and receiver and transmitter means can be found in a device such as a mobile phone. Hence one device can act as both a sender and a receiver device.

It is important that the message indicates the identity of the sender so that the receiver device can select the face to display that corresponds to the user of the sending device. In practice, this may comprise the telephone number of the sender device (for a telecommunication network) or an email address for an internet.

Typically many hundreds or thousands of sending and receiving devices may be connected to a network. In this case, a receiving device may store a database of different faces to display, each one corresponding to a different sender of a message.

By providing the animated head/faces, the presentation of a message is greatly enhanced. With the audio, this makes the device suitable for a new set of users such as those with impaired vision or with reading difficulties. It also makes the experience of reading a message more personalised as the identity of the user can be seen in the image.

The receiver device may also include an image generation means which displays a plurality of the head images on the display at the same time, with only one of them being animated by the animating means at any time. The generation means may cause the head images to be displayed such that the animated head image is displayed in a position such that it appears to be in front of the other head images. It may move the images around whenever one head image is to be animated to move that image to the front.

The generation means may display the head images in a circle which move around like a carousel as a head image is needed at the front for animation.

By displaying a plurality of heads at the same time, the user of the receiver device can easily identify the possible people they can communicate with across the network.

The sender device may also include a similar image generation means which displays head images on the screen at the same time. The user may manipulate the device to move a head image to the front to indicate that a message is to be sent to the receiver device associated with that head image.

The memory of the sender device (or receiver device) may include a group label associated with each head image, and the image generation means may display at the same time all head images which carry the same group label.

More than one group label may be associated with each head image, and the user may operate the device to select which group is to be displayed. For example, a "work" group label and a "friends" group label may be provided.

According to a second aspect the invention provides a communication device adapted to send and receive messages across a network comprising:
a memory which stores a head image comprising an image of a head viewed from the front including a face, hair and neck portions
receiver means for receiving the message comprising the sequence of textual characters;
text to speech converting means for converting the text characters of the message into an audio message corresponding to the sequence of text characters;
animating means for generating an animated partial 3D image of a head; display means for displaying the animated head; and
loudspeaker means 17 for outputting the audio message in synchronization with the displayed animated head, the animating means animating at least one facial feature of the head, the animation corresponding to movements made by the head when reading the message, and
characterised in that
the memory stores a plurality of head images, each one being associated with a different sending device and comprising an image of a head viewed from the front including a face, hair and neck portions the animating means produces a partial 3D image of a head from a head image stored in the memory which is associated with the sender of the message; characterised in that the memory includes a 3D mesh which is defined by a set of interconnected nodes which generally all lie in one plane around the peripheral region of the mesh and nodes within the periphery which are raised above the plane to correspond to facial features, the animating means generating the partial 3D head image by overlaying a head image onto the mesh with facial features of the facial region of the head image aligned with the raised facial features of the mesh and the hair and neck portions overlaying the flat peripheral region of the mesh.

The device may include any of the optional features of the receiver device described in relation to the first aspect of the invention.

The device may include an additional dictionary of tags comprising symbols or sequences of symbols (textual or otherwise) which correspond to emotions. These are sometimes known as emoticons in the art. An example is the symbol 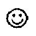 to show happiness and 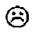 to show sadness.

The device may be adapted, when identifying such a symbol, to cause the animated image of the face to express that emotion. For example, if an emoticon indicating that the sender is expressing happiness is identified it may cause the animated face to smile.

The dictionary may include a choice of different facial features, such as mouths, associated with each sound. Which one to use may be indicated by an identifier associated with the face that is to be displayed.

The device may include a speaker through which the speech can be reproduced. Alternatively, it may include an output port through which an audio signal can be passed to a speaker. An example of the later would be a headphone jack socket.

According to a third aspect the invention provides a data structure for representing an animated model of a head/face which may be rendered as an image on a display screen characterised by comprising:
a map having a partial three dimensional surface defined as a mesh of interconnected nodes, each node being located on the surface and groups of nodes defining polygons which in turn define the contours of the surface, the surface lying generally in a single plane in a peripheral region and being raised out of that plane in a central region corresponding to the topology of a face;
a two dimensional image of a head/face which is viewed from the front which includes a face, surrounding hair and a neck portion, and can be conformed to the surface of the map to provide a partial 3 dimensional model of the face in which the face has contours corresponding to the faces features and in which the hair overlies the flat peripheral region;
at least one user defined co-ordinate which defines in the model the location within the 3D mesh of a part of a facial feature; and
at least one facial feature which is located on the map in a position defined by the user defined co-ordinate.

This data structure provides an efficient model or representation of a face which can be used, inter alia, with the preceding aspects of the invention. By laying an image on a partial 3D map, which is flat except for the region occupied by facial features where is raised out of the plane it gives a life like appearance when the model is rendered on a display, yet it requires little data to construct the 3D image when compared with a full 3D representation. Identifying the location of facial features allows animated features such as a mouth or eyes to be added during rendering to add realism, without needing to represent the feature in the data structure. Having the flat region around the face makes it possible to display hair or other features beyond the face in a simple yet realistic way.

According to a fourth aspect the invention provides a method of producing an animated partial 3D model of a head for display on a display screen characterised by the steps of:
Selecting 41 a map having a partial three dimensional surface defined as a mesh of interconnected nodes, each node being located on the surface and groups of nodes defining polygons which in turn define the contours of the surface, the surface lying generally in a single plane in a peripheral region and being raised out of that plane in a central region corresponding to the topology of a face;
Selecting 42 a two dimensional image of a head/face which is viewed from the front which includes a face, surrounding hair and a neck portion fitting 43 the image to the surface of the map to provide a partial 3 dimensional model of the face in which the face has contours corresponding to the face's features and in which the hair overlies the flat peripheral region;
selecting 45,47 from a data structure at least one user defined co-ordinate which defines the location within the mesh of a part of a facial feature in the model; and
selecting at least one facial feature 46,48; and
locating the feature on the map in a position defined by the user defined co-ordinate.

There will now be described, by way of example only, one embodiment of the present invention with reference to the accompanying drawings of which:
**Figure 1** is an overview of a communication network and connected devices in accordance with an embodiment of the present invention;
**Figure 2** is a schematic representation of a mobile telephone device in accordance with at least one aspect of the invention;
**Figure 3** illustrates a typical text message as displayed on the display of the device of Figure 2 during text entry.
**Figure 4** is a flow diagram setting out the steps performed in creating a data structure representing a head image to be sent across a network,
**Figure 5(a)** is an illustration of a 2D image of a face/head to be rendered;
**Figure 5(b)** is a representation of a typical map used in constructing a rendered head/face image;
**Figure 6** shows the image conformed to the map as it is pushed through from the back of the image;
**Figure 7** illustrates the step of locating the corner of facial features in the mapped image;
**Figure 8** illustrates the complete data structure required to define a head image;
**Figure 9** is a flowchart illustrating the steps involved in presenting a message on a receiving device;

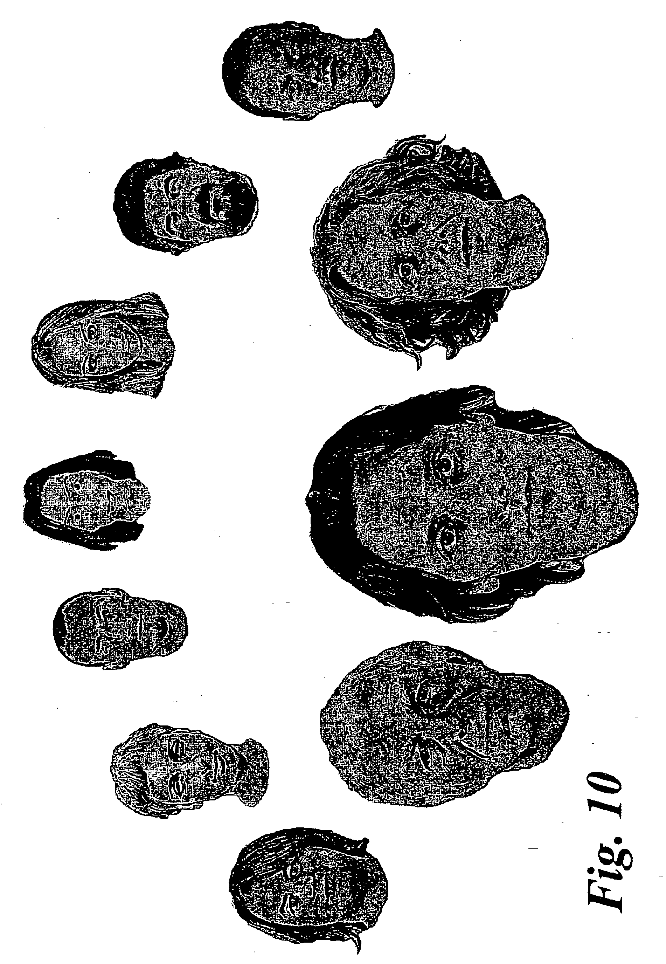

**Figure 10** is an overview of an alternative communication system which is in accordance with an aspect of the present invention; and
**Figure 11** illustrates the display of a set of head images at the same time in the form of a carousel.

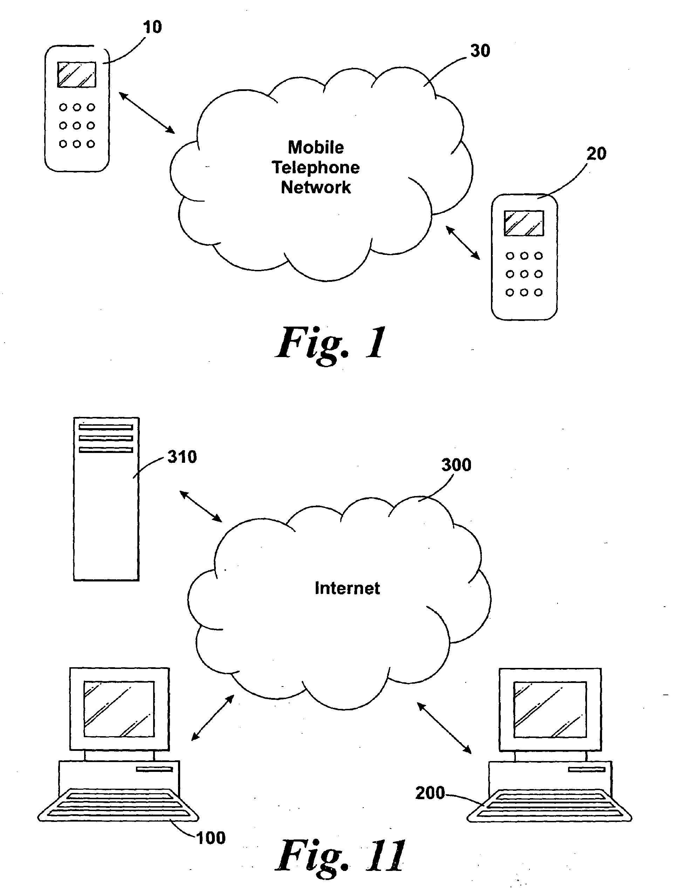

As shown in Figure 1, a pair of processing devices 10,20 are connected across a network 30. The network comprises a cellular telephone network which can carry both audio and data messages between devices connected to the network.

For clarity, in the remainder of this description one device on the network will be referred to as a sending device 10, and another as a receiving device 20. The sending device 10 enables a user to send a message across the network 30. The receiving device 20 enables a user to receive a message sent across the network 30. In practice a single device can perform the functions of both a sender device and a receiver device 10,20.

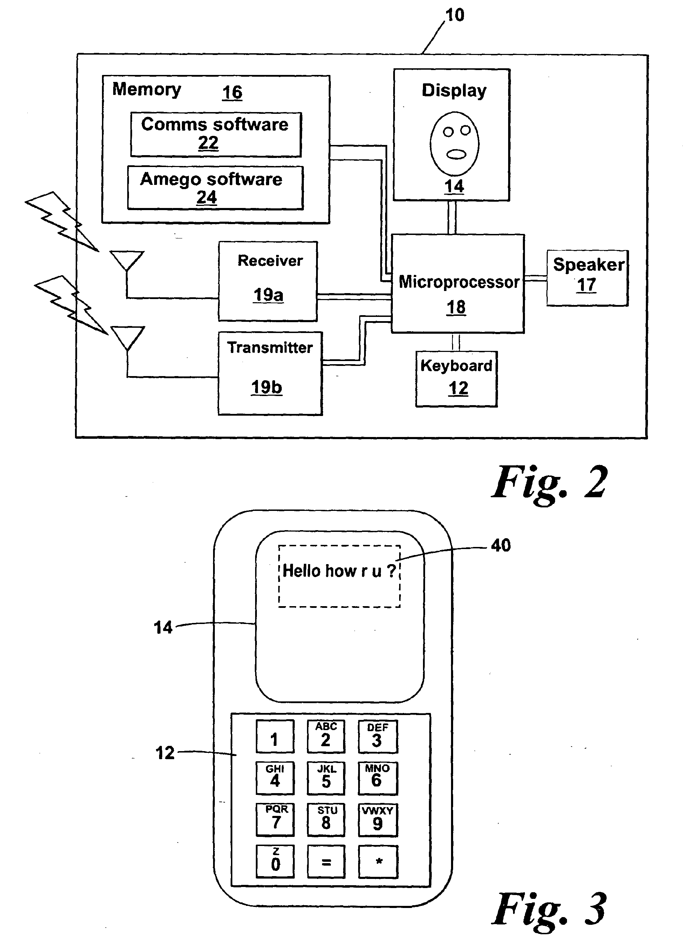

A representative sending device 10 is shown schematically in Figure 2 of the accompanying drawing. It comprises a keypad 12 for entering commands and phone numbers and a display 14 such as an LCD for displaying data. It also includes a first area of non volatile memory 16 in which are stored program instructions, preferably made from flash memory, and can either be located inside a Subscriber Identity Module (SIM) card of the device 10 or located outside the SIM card as dedicated memory of the device 10. A processor 18 controls the operation of the device 10 in accordance with the instructions stored in the memory.

The memory 16 will also contain one or more messages which have been received from other devices, and one or more messages which are to be sent or have been sent from the device. These are typically arranged into folders, a so called "Inbox" and "Sent Items" folders. The user can select to view the contents of either folder using the keyboard and then to select a message from within the folder to display.

The messages in this example comprise instant message service messages in XMPP format, but could alternatively comprise messages in other networking protocols. An example of a message 40 which may be sent and reproduced is shown in Figure 3 of the accompanying drawings as displayed on a typical screen of the device of Figure 2 during text entry. The message is entered by first selecting "new message" from the devices onscreen menu (not shown) and then entering each character through the keyboard 12. The keyboard comprises a reduced keyboard set having only 9 text keys and 3 function keys. Each text key carries several characters, and they can be selected using either a multi-stroke or two stroke entry strategy. Such strategies for entry of text on reduced keyboards are well known in the art.

Such processing devices are widely known in the art, and it is also known to provide a facility to load additional programs into the memory 16. These can then be called up by a user through the keyboard 12, and when running on the processor 18 of the device cause it to perform additional functions. As shown in Figure 2 the device includes in its memory two programs. One is a communication program 22 which enables the device to send and transmit audio or data messages across the network 30. The other is a novel program 24 called an Amego program which augments the presentation of text messages so as to enhance the users interaction with the device. In practice, many other programs may be stored such as a calendar or calculator program.

In this example, the program 24 which is stored in the memory 16 enables the phone to communicate with other devices across the network 30 in a new manner. Specifically, it enables the user to send to a remote device a partial- 3D representation of their head (or another real or imaginary persons head or a modified form of their head) which can be displayed on the display of the device such that it gives the appearance of "reading-out" the senders messages sent across the network. The program can be written in any known programming language which is supported by the sender device, and the invention should in no way be construed as limited to any particular programming language. It may, for example, be written in Java.

The program when executed on the processor of the device causes the device to perform several functions:
(1) It enables a user to create a head image or at least it stores the definition of a face/head image in the memory of the device;
(2) It sends a data structure representative of a face/head image to a user either in response to a request from the user, or with each message, or on initial contact with a new user;
(3) It renders on the display on the device of an animated image of a face/head as instructed by a remote device and defined by a data structure;
(4) It reads incoming messages and converts them into speech which can be read out to the user of the device, and animates a displayed face/head image to match the sender of the message.

The Four key features of the program will now be explained in turn:

### (1) Creating of a head image.

The device when running the program enables a user to create a data structure defining an image of a face/head to be sent to a remote device. It stores this data structure in memory in such a manner that it can be accessed and then be readily transmitted across the network to another device whilst requiring relatively little bandwidth.

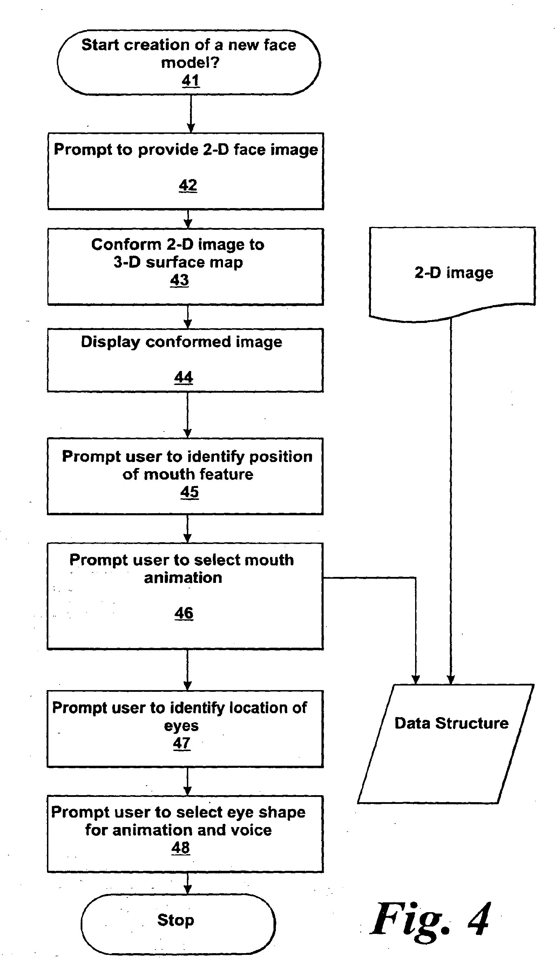

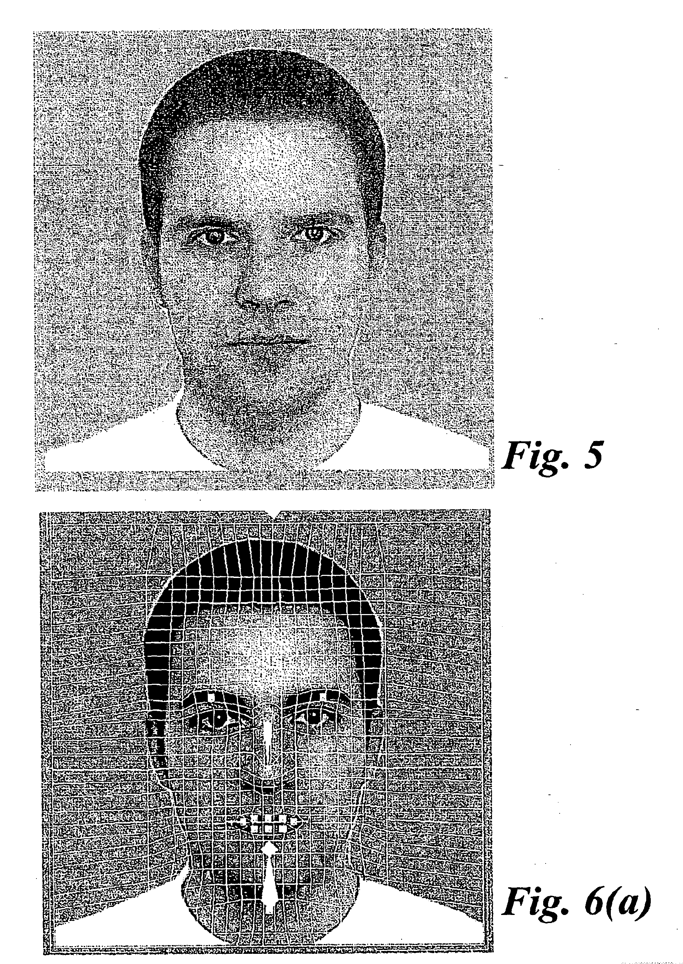

To create the rendered face/head image the program performs the functional steps set out in Figure 4 of the accompanying drawings. In a first step 41, the user prompts the device to start the creation of a new head. The device then prompts 42 the user to provide an image, in two dimensions, of a head viewed from the front so as to show a complete face. This image may typically be a photograph captured by a digital camera or scanned from a printed image. A sample image is shown in Figure 5(a) of the accompanying drawings.

In a next step 43, the image is mapped onto a map of a three dimensional surface stored in the memory of the device. The map is defined as a mesh of interconnected nodes that define a surface. The map is generally rectangular. The location of the nodes can be defined in relation to their position (X-Y coordinates) relative to a base plane (Z co-ordinate of zero) and the plurality of nodes may be located at different heights relative to the base plane and spaced apart across a region of the base plane corresponding to a defined head profile. A sample mapped surface is shown in Figure 5(b) of the accompanying drawings as a series of polygons.

The map is not a full 3D representation of a head, but a partial 3D representation. It is a partially flattened representation of how a model of a head would appear when viewed from the front or slightly to each side. As such it defines a nose and eyebrows which are partially flattened compared with real features. This has been found to be perfectly acceptable for a model of a head which is to be shown from the front only, the partially flattened features providing some perspective and shading to the finished head image.

The nodes of the mesh generally lie in the base plane all round the periphery of the map. This region is therefore flat. The inner boundary of this flat region correspond generally to the outline of a head and face. Within the head/face region, the nodes rise up out of the base plane to define facial features such as a nose and eyes and mouth and cheekbones, forehead and the like.

The step of conforming the image to the 3D surface can be thought of as analogous to printing the image on a sheet of perfectly elastic material suspended in a frame, and pressing the map into the back of the image so that the map pushes the image out of its original flat plane to conform to the topological features of the map. The image is pushed until the base plane of the map coincides with the plane of the image. This is shown in Figure 6(a) of the accompanying drawings. To help this process, the user is shown the map behind the image prior to conforming to allow the user to align the map and image on the display. The user can also scale the image to fit the map if required. The map is then "pushed" into the back of the image to make it a partial three dimensional model.

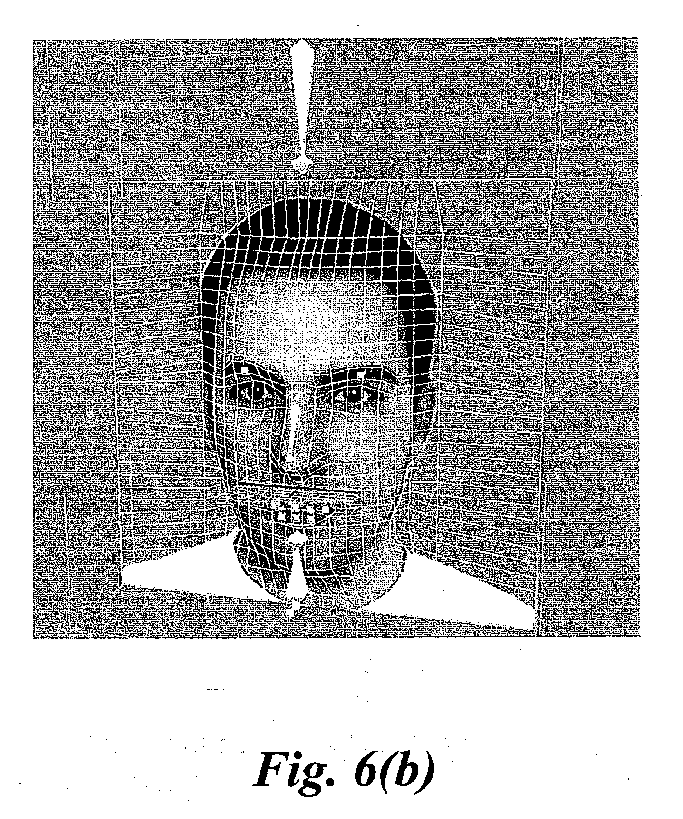

The end result is the facial region of the image is given contours whilst the region around it, which may contain hair for example, is flat. This partial 3D model can, when displayed, be tilted slightly to the side and because it has depth in the Z-plane will appear to be a real 3D head rotating in three planes. This can be seen in Figure 6(b) of the accompanying drawings.

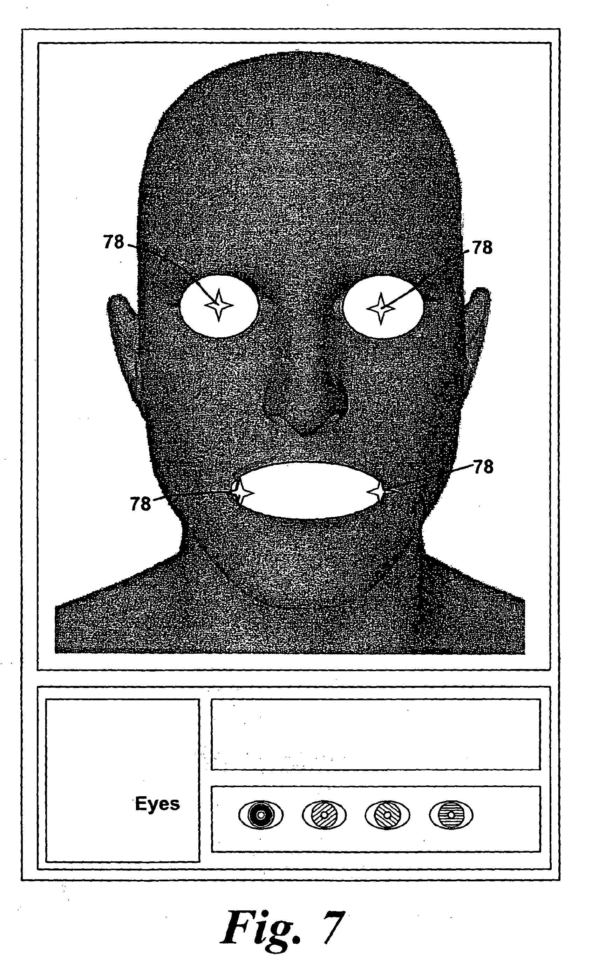

In the next stage 44, the partial 3D image is displayed on the display and the user is prompted to indicate 45 the location co-ordinates of opposing corners of the mouth in the displayed image. This can be performed by the device showing cursors on the screen which the user can position using the keypad. The user is then asked to indicate when they are happy with the position of the cursors. Once this is complete, the co-ordinates of the corners are stored in the memory. The user is then prompted to select 46 from a choice of different features to be provided at the coordinates, e.g. different shaped eye sockets or colours of eyes. This is shown in Figure 7 of the accompanying drawings.

In the next step 47, the user is prompted to indicate the location of the centre of both eyes in the displayed mapped image.

Finally, the original 2D image and the coordinates of the mouth and eyes are stored as a data structure which represents the complete head image. This may comprise a single electronic file, It is to be noted that provided knowledge of the original topological map is known, this is all that is needed to recreate the head image on any device. The data is simply fitted to the standard map.

Optionally, the user is also presented with a selection of different facial feature such as eye socket shapes from which to select. These comprise pre-programmed animated features, and the selection allows the user to choose the preferred eye colour or shape and so on. The identity of the chosen feature is then stored in the data structure.

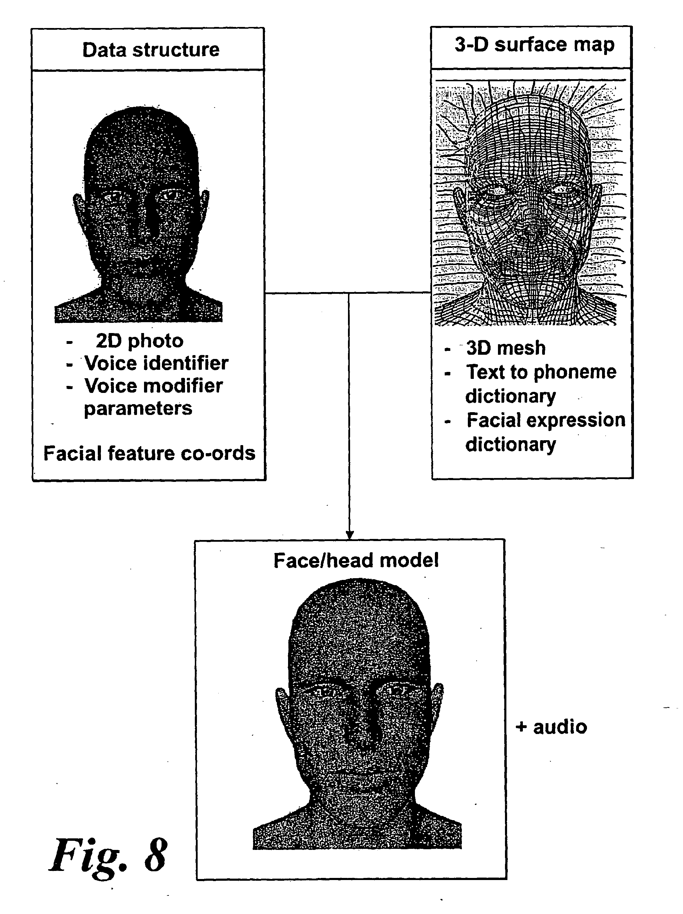

The content of the data structure is illustrated in Figure 8 of the accompanying drawings.

Of course, it is possible for this creation stage to be executed on a device other than a mobile device, such as a personal computer. This may have advantages in terms of ease of use, as a personal computer will often have a more comprehensive user interface than a mobile device. For example, a PC may include a mouse which simplifies the task of the user indicating the location of the mouth and eyes.

### (2) Sending the head image to a remote device.

Once a data structure representing a head image has been created it may be stored on the sender device and transmitted to a central network server where it is stored in a database along with other details of the sender, including unique means of identification. When another user is in correspondence with the sender for the first time, this user will receive the sender's head image data structure and have it stored on his own device, so that in future correspondence the data structure does not need to be sent again, thus reducing the volume of data transmitted when exchanging subsequent messages. The unique means of identification may be a unique number, IP address or MAC address and will be associated exclusively with the head image data structure in a database so that messages can be correctly routed. In the event that users make changes to their head image the sending device can send the amended image to the database, which can then forward the amended image to all those receiving devices that it has recorded to have previously been in contact with that sender.

The head image is sent to the remote device by sending the 2D image and the co-ordinates of the corners of the salient features, e.g. mouth and eyes. This is advantageous as it can be compressed into a small file size compared with sending a full 3D image.

At the remote device, the data structure is stored in a memory indexed by the identity of the sender of the data structure. This is important as it enables the remote device to choose the correct data structure when a message is later received.

### (3) Rendering an image and reading a message

An important aspect of the program is its ability to render a face/head image on the display of the device and to animate this in time with a spoken form of a text message such that the head appears to read the message. This is really a function of a receiver device and is invoked whenever a user selects a message that is stored in the memory of the device and prompts the device to display the message.

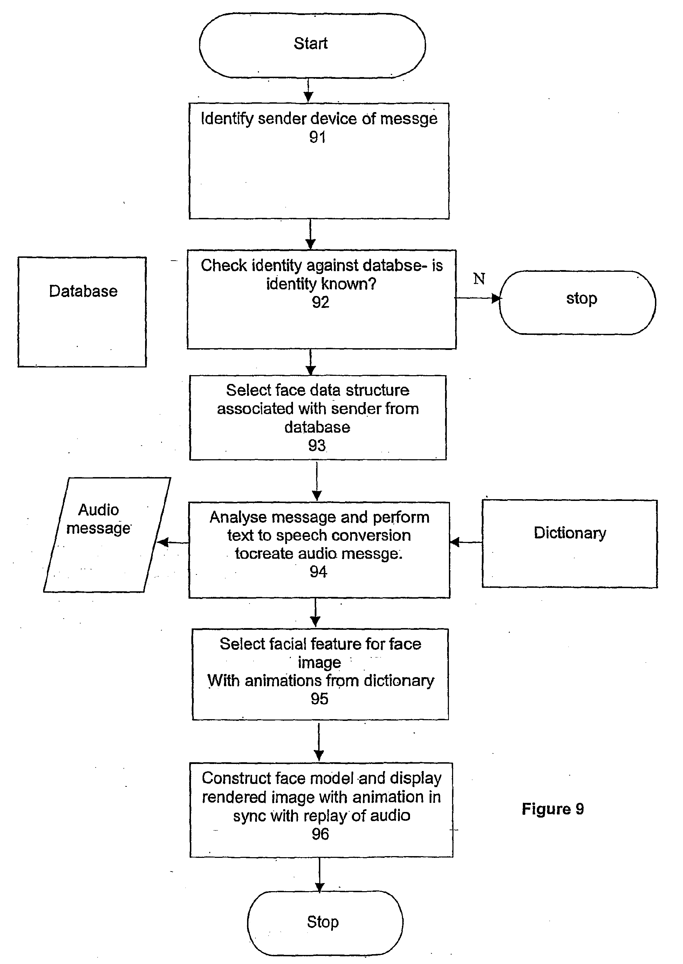

The steps of presenting the spoken and animated message to a user are shown in Figure 9 of the accompanying drawings. In a first step 91, the identity of the sender of a message is determined. This is then checked 92 against a table of senders to see if it is one that is recognised. If it is in the table, then the corresponding head image is selected.

In the next stage 93, the message is analysed either letter by letter or word by word to identify phonemes in the message. The identification process may be achieved using a phonic dictionary stored in the memory of the device. This comprises a database of sound files, each of which corresponds to a phoneme. Using this database, an audio file is constructed that corresponds to the message that is to be read. However, in this embodiment it is converted using a rule based schema in which a set of rules stored in the memory is used to determine what sounds should be used for different sequences of textual characters.

In the next stage 94, the mouth is selected for the head image and is animated such that it appears to move in sync with the phonemes in the audio file. In practice, each phoneme will be associated with a sequence of mouth images or visemes which appear to show the mouth moving as if making the sound. The sequence of mouth movements is stored in a data structure.

In a final step 95, the head image is rendered on the display with the mouth image overlaid in sync with the playing of the audio file through the speaker of the device.

Because the map and the animations can be prestored in a memory of the device, all that needs to be received to add a new face/head image for a sender is a 2D image file and the location of the facial features. This represents far less data than receiving a complete 3D animation of the face from the sender, especially when faces for multiple senders may be displayed.

### Modifications

Various refinements to the invention are envisaged. In one refinement, an emotion dictionary may be provided in the memory of the device. This will include a set of predefined facial expressions identified by sequences of characters - tags - that may be typed in a message. These sequences are sometimes referred to as emoticons. For each different facial expression the facial features will be modified to show that expression. The emotion dictionary and phoneme dictionaries may be combined. Rather than a single mouth animation for each phoneme there may be several with each one corresponding to a different emotion. The correct one will be selected according to any emoticons inserted into the message.

For example, if a message starts with the tag/emoticon :) then the mouth animations corresponding to a happy face may be used to animate the mouth. If it starts with the emoticon : (then a different set of mouth expressions corresponding to a sad face may be used.

Additionally, the tone of the audio may be varied to correspond with the emotion.

In a still further refinement, the device may include an image generation means which causes a set of head images to be displayed on the screen at the same time. The images are displayed in the manner of a carousel. This can be seen in Figure 11 of the accompanying drawings. Whenever a head image is to be animated the head images rotate around the carousel until that image is located at the front. To make it stand out further this one may be larger than the others or may be of a higher intensity.

The device also permits the user to move the head images round the carousel to allow a head image to be selected. A message can then be entered and it will be sent by the device to the selected head image.

It will also be understood that whilst a preferred embodiment relates to mobile telephones the invention has much wider ranging application than that. In an alternative embodiment the messages comprise email and both the sender device and receiver device comprise personal computers (desktop computers, laptop computers, tablet PCs or PDAs) connected to one another across an internet. This is shown in Figure 11 of the accompanying drawings.

In this arrangement, rather than specifying a phone number as a destination for an SMS message, an email address is specified and the message takes the form of an animated partial 3D image embedded in an email message or as an attachment to an email message.

As before, the transmission of the 3D head may be achieved by embedding a file containing the information within the body of an email or by attaching the file to the email.

It is envisaged that the method of providing head images for use with the audible reproduction of a typed message will soon become a common worldwide standard. All that is required is to load the program onto a device which has a display and can receive messages. The program will include the standard topological map and a dictionary of phonics for use in text to audio conversion. Because only the 2D image and the co-ordinates of facial features need to be transmitted to send a face/head image to a remote device, a high bandwidth is not required to provide a partial 3D animation of the face/head.

In another alternative embodiment, an animated partial 3D image or plurality of partial 3D images may be embedded in a web page by means of a browser plug-in, in order to deliver a spoken message or other text or spoken information to the recipient, or to engage in a discussion between the senders of the images through the medium of the display devices.

In a further alternative embodiment, an animated partial 3D image or plurality of partial 3D images may be embedded in an otherwise independent software program, for example an email client or slideshow application or other program, in order to deliver a spoken message or other text or spoken information to the user or viewer through the medium of the display device.

## Claims

1. A communication system comprising:
a sending device (10)
a receiving device (20) and
a network (30) which connects the sending device (10) to the receiving device (20);
in which the sending device (10) comprises:
at least one user operable input (12) for entering a sequence of textual characters as a message and transmission means for sending the message across the network (30);
in which the receiving device (20) comprises:
a memory (16) which stores a head image;
receiver means (19a) for receiving the message comprising the sequence of textual characters;
text to speech converting means for converting the text characters of the message into an audio message corresponding to the sequence of text characters;
animating means (18) for generating an animated partial 3D image of a head from the head image stored in the memory which is associated with the sender of the message;
the animating means animating at least one facial feature of the head, the animation corresponding the movements made by the head when reading the message;
display means (14) for displaying the animated partial 3D head; and loudspeaker means (17) for outputting the audio message in synchronisation with the displayed head,
and **characterised in that** the memory (16) stores a plurality of head images, each one being associated with a different sending device and comprising an image of a head viewed from the front including a face, hair and neck portions, and in which the memory further includes a 3D mesh which is defined by a set of interconnected nodes which generally all lie in one plane around a peripheral region of the mesh and nodes within the periphery which are raised above the plane to correspond to facial features,
the animating means generating the partial 3D head image by overlaying a head image onto the mesh with facial features of the facial region of the head image aligned with the raised facial features of the mesh and the hair portions overlaying the flat peripheral region of the mesh.

2. The system of claim 1 in which a single mesh is stored in the memory (16) of the receiving device (20) for use in rendering the animated head from any sender whose head image is stored in the receiver device 20.

3. The system of claim 1 or 2 in which a separate animation of the mesh is stored for animating each speech phoneme needed to speak a message.

4. The system of any preceding claim in which a stored head image comprises a photograph, such as a digital photograph, of a head viewed from the front.

5. The system of any preceding claim in which associated with each head image in the memory (16) are one or more co-ordinates which define the location on the mesh of a facial feature that is to be animated.

6. The system of any preceding claim in which each head image is associated with an identifier which indicates the identity of a sender of a message associated with that face image.

7. The system of any preceding claim in which a set of rules is provided in the memory (16) which define the phoneme that is to be used for a given combination or sequence of textual characters.

8. The system of any preceding claim in which the network (30) comprises a cellular telephone network and the sending device and receiving device each comprise a cellular telephone.

9. The system of any preceding claim in which the transmitted message is sent in an instant messaging data format such as XMPP.

10. The system of any preceding claim in which the receiver device (20) includes an image generation means which displays a plurality of the head images on the display (14) at the same time, with one or more of them being animated by the animating means at any time.

11. The system of claim 10 in which the generation means causes the head images to be displayed such that the animated head image is displayed in a position such that it appears to be in front of the other head images and is adapted to move the images around whenever one head image is to be animated to move that image to the front.

12. The system of claim 11 in which the generation means displays the head images in a circle which move around like a carousel.

13. The system of any one of claims 10 to 12 in which the memory of the sending device or receiving device includes a group label associated with each head image, and the image generation means displays at the same time all head images which carry the same group label.

14. A communication device (20) adapted to send and receive messages across a network (30) comprising:
a memory (16) which stores a head image comprising an image of a head viewed from the front including a face, hair and neck portions receiver means (19a) for receiving a message comprising the sequence of textual characters;
text to speech converting means for converting the text characters of the message into an audio message corresponding to the sequence of text characters;
animating means for generating an animated partial 3D image of a head;
display means (14) for displaying the animated head; and
loudspeaker means (17) for outputting the audio message in synchronization with the displayed animated head, the animating means animating at least one facial feature of the head, the animation corresponding to movements made by the head when reading the message, and
**characterised in that**
the memory (16) stores a plurality of head images, each one being associated with a different sending device and comprising an image of a head viewed from the front including a face, hair and neck portions
the animating means produces a partial 3D image of a head from a head image stored in the memory which is associated with the sender of the message; and **in that** the memory includes a 3D mesh which is defined by a set of interconnected nodes which generally all lie in one plane around the peripheral region of the mesh and nodes within the periphery which are raised above the plane to correspond to facial features, the animating means generating the partial 3D head image by overlaying a head image onto the mesh with facial features of the facial region of the head image aligned with the raised facial features of the mesh and the hair and neck portions overlaying the flat peripheral region of the mesh.

15. A data structure for representing an animated model of a head/face which may be rendered as an image on a display screen **characterised by** comprising:
a map having a partial three dimensional surface defined as a mesh of interconnected nodes, each node being located on the surface and groups of nodes defining polygons which in turn define the contours of the surface, the surface lying generally in a single plane in a peripheral region and being raised out of that plane in a central region corresponding to the topology of a face;
a two dimensional image of a head/face which is viewed from the front which includes a face, surrounding hair and a neck portion, and can be conformed to the surface of the map to provide a partial 3 dimensional model of the face in which the face has contours corresponding to the faces features and in which the hair overlies the flat peripheral region;
at least one user defined co-ordinate which defines in the model the location within the 3D mesh of a part of a facial feature; and
at least one facial feature which is located on the map in a position defined by the user defined co-ordinate.

16. A method of producing an animated partial 3D model of a head for display on a display screen **characterised by** the steps of:
Selecting (41) a map having a partial three dimensional surface defined as a mesh of interconnected nodes, each node being located on the surface and groups of nodes defining polygons which in turn define the contours of the surface, the surface lying generally in a single plane in a peripheral region and being raised out of that plane in a central region corresponding to the topology of a face;
Selecting (42) a two dimensional image of a head/face which is viewed from the front which includes a face, surrounding hair and a neck portion fitting (43) the image to the surface of the map to provide a partial 3 dimensional model of the face in which the face has contours corresponding to the face's features and in which the hair overlies the flat peripheral region;
selecting (45,47) from a data structure at least one user defined co-ordinate which defines the location within the mesh of a part of a facial feature in the model; and selecting at least one facial feature (46,48); and
locating the feature on the map in a position defined by the user defined co-ordinate.

17. The method of claim 16 which comprises the further steps of rendering the model defined by the data structure on a display.

18. The method of claim 17 in which the step of rendering includes providing a rendered, animated, model of at least one facial feature such as mouth or eyes, and locating them on the displayed conformed image at the co-ordinates indicated in the data structure.

## Patentansprüche

1. Ein Kommunikationssystem, bestehend aus:
einem Sendegerät (10)
einem Empfangsgerät (20) und
einem Netz (30), das das Sendegerät (10) mit dem Empfangsgerät (20) verbindet;
worin das Sendegerät (10) Folgendes umfasst:
mindestens eine vom Benutzer bedienbare Eingabe (12) zum Erfassen einer Sequenz von Buchstaben als Nachricht sowie eine Übertragungseinrichtung zum Versenden der Nachricht über das Netz (30);
worin das Empfangsgerät (20) Folgendes umfasst:
einen Speicher (16), der ein Kopfbild speichert;
eine Empfangseinrichtung (19a) zum Empfang der Nachricht, welche die Sequenz von Buchstaben enthält;
eine Einrichtung zur Umwandlung von Text in Sprache, um die Buchstaben der Nachricht in eine Audiomitteilung, die der Sequenz der Buchstaben entspricht, umzuwandeln;
eine Animationseinrichtung (18) zum Erzeugen eines animierten partiellen 3D-Bildes eines Kopfes aus dem im Speicher gespeicherten Kopfbild, das dem Sender der Nachricht zugeordnet wird;
wobei die Animationseinrichtung mindestens ein Gesichtsmerkmal des Kopfes animiert und
wobei die Animation den Bewegungen entspricht, die vom Kopf beim Lesen der Nachricht gemacht werden;
eine Anzeigeeinrichtung (14) zur Anzeige des animierten partiellen 3D-Kopfes; und
eine Lautsprechereinrichtung (17) zur Ausgabe der Audiomitteilung synchron mit dem gezeigten Kopf;
**dadurch gekennzeichnet, dass** der Speicher (16) eine Vielzahl von Kopfbildern speichert, von denen jedes einem anderen Sendegerät zugeordnet wird, und ein Bild eines Kopfes umfasst, der von vorne zu sehen ist, einschließlich Gesicht, Haare und Halsabschnitte, und in dem der Speicher überdies ein 3D-Netz enthält, das durch eine Reihe von miteinander verbundenen Knoten definiert wird, die im Allgemeinen alle in einer Ebene um einen peripheren Bereich des Netzes herum liegen, sowie Knoten innerhalb des äußeren Randes, die sich über die Ebene hinaus erheben, um mit Gesichtsmerkmalen übereinzustimmen,
wobei die Animationseinrichtung das partielle 3D-Kopfbild erzeugt, indem ein Kopfbild das Netz überlagert, und wobei Gesichtsmerkmale der Gesichtsregion des Kopfbildes an den erhöhten Gesichtsmerkmalen des Netzes und den Haarabschnitten, die die flachen Randregionen des Netzes überlagern, ausgerichtet sind.

2. Das System aus Anspruch 1, in dem ein einzelnes Netz im Speicher (16) des Empfangsgeräts (20) gespeichert ist zum Einsatz bei der Wiedergabe des animierten Kopfes jedes Senders, dessen Kopfbild in einem Empfangsgerät (20) gespeichert ist.

3. Das System aus Anspruch 1 oder 2, in dem eine getrennte Animation des Netzes gespeichert ist, um jedes Sprachphonem, das zum Sprechen einer Nachricht notwendig ist, zu animieren.

4. Das System aus einem vorhergehenden Anspruch, in dem ein gespeichertes Kopfbild eine Fotografie, z.B. ein Digitalfotografie, eines Kopfes ist, der von vorne zu sehen ist.

5. Das System aus einem vorhergehenden Anspruch, in dem jedem Kopfbild im Speicher (16) eine oder mehrere Koordinaten zugeordnet werden, die die Position eines Gesichtsmerkmals, das animiert werden soll, auf dem Netz definieren.

6. Das System aus einem vorhergehenden Anspruch, in dem jedes Kopfbild einem Identifikator zugordnet wird, der die Identität eines Senders der Nachricht, die mit diesem Gesichtsbild verbunden ist, anzeigt.

7. Das System aus einem vorhergehenden Anspruch, in dem eine Reihe von Regeln im Speicher (16) vorhanden sind, die das Phonem definieren, welches für eine vorgegebene Kombination oder Sequenz von Buchstaben verwendet werden soll.

8. Das System aus einem vorhergehenden Anspruch, in dem das Netz (30) ein Mobiltelefonnetz umfasst und das Sende- und das Empfangsgerät jeweils ein Mobiltelefon beinhaltet.

9. Das System aus einem vorhergehenden Anspruch, in dem die übertragene Nachricht in einem SMS-Datenformat wie XMPP gesendet wird.

10. Das System aus einem vorhergehenden Anspruch, in dem das Empfangsgerät (20) eine Bilderzeugungseinrichtung beinhaltet, die eine Vielzahl der Kopfbilder gleichzeitig auf dem Bildschirm (14) anzeigt, wobei zu jeder Zeit eines oder mehrere dieser Kopfbilder mithilfe der Animationseinrichtung animiert werden.

11. Das System aus Anspruch 10, in dem die Bilderzeugungseinrichtung das Anzeigen der Kopfbilder bewirkt, um das animierte Kopfbild in einer Position zu zeigen, sodass es sich vor den anderen Kopfbildern zu befinden scheint, und wobei das System adaptiert wird, um die Bilder herumzubewegen, sobald ein Kopfbild animiert wird, sodass dieses Bild nach vorne verschoben wird.

12. Das System aus Anspruch 11, in dem die Bilderzeugungseinrichtung die Kopfbilder in einem Kreis anzeigt und sich diese wie ein Karussell bewegen.

13. Das System aus einem der Ansprüche 10 bis 12, in dem der Speicher der Sende- oder Empfangseinrichtung ein Gruppenkennzeichen, das jedem Kopfbild zugeordnet wird, beinhaltet, und die Bilderzeugungseinrichtung gleichzeitig alle Kopfbilder anzeigt, die dasselbe Gruppenkennzeichen aufweisen.

14. Ein Kommunikationsgerät (20), das adaptiert wurde, um Nachrichten über ein Netzwerk (30) zu senden und zu empfangen, bestehend aus:
einem Speicher (16), der ein Kopfbild speichert, welches ein Bild eines Kopfes, das von vorne zu sehen ist, umfasst, einschließlich Gesicht, Haare und Halsabschnitte;
einer Empfangseinrichtung (19a) zum Empfang einer Nachricht, die die Sequenz von Buchstaben beinhaltet;
einer Einrichtung zur Umwandlung der Buchstaben der Nachricht in eine Audiomitteilung, um die Buchstaben der Nachricht in eine Audiomitteilung, die der Sequenz der Buchstaben entspricht, umzuwandeln;
einer Animationseinrichtung zum Erzeugen eines animierten partiellen 3D-Bildes eines Kopfes;
einer Anzeigeeinrichtung (14) zur Anzeige des animierten Kopfes; und
einer Lautsprechereinrichtung (17) zur Ausgabe der Audiomitteilung synchron mit dem gezeigten animierten Kopf, wobei die Animationseinrichtung mindestens ein Gesichtsmerkmal des Kopfes animiert und die Animation den vom Kopf beim Lesen der Nachricht gemachten Bewegungen entspricht; und
**dadurch gekennzeichnet, dass**
der Speicher (16) eine Vielzahl von Kopfbildern speichert, von denen jedes einem anderen Sendegerät zugeordnet wird und ein Bild eines Kopfes umfasst, der von vorne zu sehen ist, einschließlich Gesicht, Haare und Halsabschnitte,
die Animationseinrichtung ein partielles 3D-Bild eines Kopfes von einem Kopfbild erzeugt,
das im Speicher gespeichert ist und dem Sender der Nachricht zugeordnet wird; und dass der Speicher ein 3D-Netz enthält, das durch eine Reihe von miteinander verbundenen Knoten definiert wird, die im Allgemeinen alle in einer Ebene um einen peripheren Bereich des Netzes herum liegen, sowie Knoten innerhalb des äußeren Randes, die sich über die Ebene hinaus erheben, um mit den Gesichtsmerkmalen übereinzustimmen, wobei die Animationseinrichtung das partielle 3D-Kopfbild erzeugt, indem ein Kopfbild das Netz überlagert, und wobei die Gesichtsmerkmale der Gesichtsregion des Kopfbildes an den erhöhten Gesichtsmerkmalen des Netzes und den Haaren und Halsabschnitten, die die flachen Randregionen des Netzes überlagern, ausgerichtet sind.

15. Eine Datenstruktur zur Darstellung eines animierten Modells eines Kopfes/Gesichts, das als ein Bild auf einem Bildschirm dargestellt werden kann, **dadurch gekennzeichnet, dass** Folgendes enthalten ist:
ein Plan, der teilweise ein dreidimensionale Oberfläche aufweist, definiert als Netz von miteinander verbundenen Knoten, wobei jeder Knoten sich auf der Oberfläche befindet und Gruppen von Knoten Vielecke definieren, die ihrerseits wiederum die Umrisse der Oberfläche definieren, wobei die Oberfläche im Allgemeinen in einer einzigen Ebene in einem peripheren Bereich liegt und sich in einem zentralen Bereich entsprechend der Topologie eines Gesichts aus dieser Ebene heraus erhebt;
ein zweidimensionales Bild des Kopfes/Gesichts, das von vorne zu sehen ist und das ein Gesicht, die umgebenden Haare und einen Halsabschnitt umfasst und an die Oberfläche des Plans angeglichen werden kann, um ein teilweise dreidimensionales Modell des Gesichts, in dem die Gesichtsumrisse mit den Gesichtsmerkmalen übereinstimmen und in dem die Haare den flachen Randbereich überlagern, herzustellen;
mindestens eine benutzerdefinierte Koordinate, die im Modell die Position eines Teils eines Gesichtsmerkmals innerhalb des 3D-Netzes definiert; und
mindestens ein Gesichtsmerkmal, das sich auf dem Plan an einer Stelle befindet, die durch die benutzerdefinierte Koordinate definiert wird.

16. Ein Verfahren zur Herstellung eines animierten partiellen 3D-Modells eines Kopfes zur Anzeige auf einem Bildschirm, das durch folgende Schritte gekennzeichnet ist:
Auswahl (41) eines Plans mit einer teilweise dreidimensionalen Oberfläche, definiert als Netz von miteinander verbundenen Knoten, wobei jeder Knoten sich auf der Oberfläche befindet, sowie Gruppen von Knoten, die Vielecke definieren, die ihrerseits wiederum die Umrisse der Oberfläche definieren, wobei die Oberfläche im Allgemeinen in einer einzigen Ebene in einem peripheren Bereich liegt und sich in einem zentralen Bereich entsprechend der Topologie eines Gesichts aus dieser Ebene heraus erhebt;
Auswahl (42) eines zweidimensionalen Bildes des Kopfes/Gesichts, das von vorne zu sehen ist und ein Gesicht, umgebende Haare und einen Halsabschnitt beinhaltet;
Montage (43) des Bildes auf die Oberfläche des Plans, um ein partielles dreidimensionales Modell des Gesichts herzustellen, in dem das Gesicht Umrisse aufweist, die den Merkmalen des Gesichts entsprechen und in dem die Haare den flachen peripherene Bereich überlagern;
Auswahl (45, 47) aus einer Datenstruktur von mindestens einer benutzerdefinierten Koordinate, welche die Position eines Teiles des Gesichtsmerkmals innerhalb des Netzes im Modell definiert; und Auswahl von mindestens einem Gesichtsmerkmal (46, 48); und
Lokalisierung des Merkmals auf dem Plan an einer Stelle, die von der benutzerdefinierten Koordinate definiert wird.

17. Das Verfahren aus Anspruch 16, das die weiteren Schritte einer Wiedergabe des Modells, definiert durch die Datenstruktur auf einem Bildschirm, beinhaltet.

18. Das Verfahren aus Anspruch 17, in dem der Schritt der Wiedergabe das Bereitstellen eines wiedergegebenen, animierten Modells von mindestens einem Gesichtsmerkmal, wie dem Mund oder den Augen, beinhaltet, sowie das Auffinden derselben auf dem gezeigten angepassten Bild an den in der Datenstruktur angegebenen Koordinaten.

## Revendications

1. Un système de communication comprenant :
un dispositif d'envoi (10),
un dispositif de réception (20), et
un réseau (30) qui raccorde le dispositif d'envoi (10) au dispositif de réception (20),
dans lequel le dispositif d'envoi (10) comprend :
au moins une entrée utilisable par l'opérateur (12) destinée à l'entrée d'une séquence de caractères textuels sous la forme d'un message et un moyen de transmission destiné à l'envoi du message par l'intermédiaire du réseau (30),
dans lequel le dispositif de réception (20) comprend :
une mémoire (16) qui conserve en mémoire une image de tête,
un moyen de réception (19a) destiné à recevoir le message comprenant la séquence de caractères textuels,
un moyen de conversion texte en parole destiné à convertir les caractères textuels du message en un message audio correspondant à la séquence de caractères textuels,
un moyen d'animation (18) destiné à générer une image partiellement en 3D animée d'une tête à partir de l'image de tête conservée en mémoire dans la mémoire qui est associée à l'expéditeur du message ;
le moyen d'animation animant au moins une caractéristique faciale de la tête, l'animation correspondant aux mouvements effectués par la tête lors de la lecture du message,
un moyen d'affichage (14) destiné à afficher la tête partiellement en 3D animée, et un moyen de haut-parleur (17) destiné à produire le message audio en synchronisation avec la tête affichée,
et **caractérisé en ce que** la mémoire (16) conserve en mémoire une pluralité d'images de tête, chacune d'elles étant associée à un dispositif d'envoi différent et comprenant une image d'une tête vue de face comprenant des parties visage, cheveux et cou, et dans lequel la mémoire comprend en outre un maillage 3D qui est défini par un ensemble de noeuds interconnectés qui généralement se situent tous dans un plan autour d'une zone périphérique du maillage et des noeuds à l'intérieur de la périphérie qui sont surélevés au-dessus du plan de façon à correspondre à des caractéristiques faciales, le moyen d'animation générant l'image partiellement en 3D de tête en superposant une image de tête sur le maillage avec des caractéristiques faciales de la zone faciale de l'image de tête alignées avec les caractéristiques faciales surélevées du maillage et les parties cheveux chevauchant la zone périphérique plane du maillage.

2. Le système selon la Revendication 1 dans lequel un maillage unique est conservé en mémoire dans la mémoire (16) du dispositif de réception (20) pour une utilisation dans le rendu de la tête animée de tout expéditeur dont une image de tête est conservée en mémoire dans le dispositif de réception 20.

3. Le système selon la Revendication 1 ou 2 dans lequel une animation distincte du maillage est conservée en mémoire de façon à animer chaque phonème vocal nécessaire pour vocaliser un message.

4. Le système selon l'une quelconque des Revendications précédentes dans lequel une image de tête conservée en mémoire comprend une photographie, par exemple une photographie numérique, d'une tête vue de face.

5. Le système selon l'une quelconque des Revendications précédentes dans lequel, associées à chaque image de tête dans la mémoire (16), on trouve une ou plusieurs coordonnées qui définissent l'emplacement sur le maillage d'une caractéristique faciale qui doit être animée.

6. Le système selon l'une quelconque des Revendications précédentes dans lequel chaque image de tête est associée à un identifiant qui indique l'identité d'un expéditeur d'un message associé à cette image de visage.

7. Le système selon l'une quelconque des Revendications précédentes dans lequel un ensemble de règles est fourni dans la mémoire (16) qui définissent le phonème à utiliser pour une combinaison ou une séquence de caractères textuels donnée.

8. Le système selon l'une quelconque des Revendications précédentes dans lequel le réseau (30) comprend un réseau de téléphonie cellulaire et le dispositif d'envoi et le dispositif de réception comprennent chacun un téléphone cellulaire.

9. Le système selon l'une quelconque des Revendications précédentes dans lequel le message transmis est envoyé dans un format de données de messagerie instantanée tel que XMPP.

10. Le système selon l'une quelconque des Revendications précédentes dans lequel le dispositif de réception (20) comprend un moyen de génération d'images qui affiche une pluralité d'images de tête sur l'écran (14) simultanément, une ou plusieurs d'entre elles étant animées par le moyen d'animation à tout moment.

11. Le système selon la Revendication 10 dans lequel le moyen de génération amène les images de tête à être affichées de sorte que l'image de tête animée soit affichée dans une position telle qu'elle semble se trouver devant les autres images de tête et est adapté de façon à déplacer les images chaque fois qu'une image de tête doit être animée de façon à déplacer cette image vers l'avant.

12. Le système selon la Revendication 11 dans lequel le moyen de génération affiche les images de tête en un cercle qui se déplace comme un carrousel.

13. Le système selon l'une quelconque des Revendications 10 à 12 dans lequel la mémoire du dispositif d'envoi ou du dispositif de réception comprend une étiquette de groupe associée à chaque image de tête, et le moyen de génération d'images affiche simultanément toutes les images de tête qui comportent la même étiquette de groupe.

14. Un dispositif de communication (20) adapté de façon à envoyer et recevoir des messages par l'intermédiaire d'un réseau (30) comprenant :
une mémoire (16) qui conserve en mémoire une image de tête comprenant une image d'une tête vue de face comprenant des parties visage, cheveux et cou,
un moyen de réception (19a) destiné à recevoir un message comprenant la séquence de caractères textuels,
un moyen de conversion texte en parole destiné à convertir les caractères textuels du message en un message audio correspondant à la séquence de caractères textuels,
un moyen d'animation destiné à générer une image partiellement en 3D animée d'une tête, un moyen d'affichage (14) destiné à afficher la tête animée, et
un moyen de haut-parleur (17) destiné à produire le message audio en synchronisation avec la tête animée affichée, le moyen d'animation animant au moins une caractéristique faciale de la tête, l'animation correspondant aux mouvements effectués par la tête lors de la lecture du message, et
**caractérisé en ce que**
la mémoire (16) conserve en mémoire une pluralité d'images de tête, chacune d'elles étant associée à un dispositif d'envoi différent et comprenant une image d'une tête vue de face comprenant des parties visage, cheveux et cou,
le moyen d'animation produit une image partiellement en 3D d'une tête à partir d'une image de tête conservée en mémoire dans la mémoire qui est associée à l'expéditeur du message, et **en ce que** la mémoire comprend un maillage 3D qui est défini par un ensemble de noeuds interconnectés qui généralement se situent tous dans un plan autour de la zone périphérique du maillage et des noeuds à l'intérieur de la périphérie qui sont surélevés au-dessus du plan de façon à correspondre à des caractéristiques faciales, le moyen d'animation générant l'image partiellement en 3D de tête en superposant une image de tête sur le maillage avec des caractéristiques faciales de la zone faciale de l'image de tête alignées avec les caractéristiques faciales surélevées du maillage et les parties cheveux et cou chevauchant la zone périphérique plane du maillage.

15. Une structure de données destinée à représenter un modèle animé d'une tête/visage qui peut être rendu sous la forme d'une image sur un écran d'affichage **caractérisé en ce qu'**elle comprend :
une carte possédant une surface partiellement en trois dimensions définie sous la forme d'un maillage de noeuds interconnectés, chaque noeud étant situé sur la surface et des groupes de noeuds définissant des polygones qui à leur tour définissent les contours de la surface, la surface se trouvant généralement dans un plan unique dans une zone périphérique et étant surélevée de ce plan dans une zone centrale correspondant à la topologie d'un visage,
une image en deux dimensions d'une tête/visage qui est vue de face et qui comprend un visage, des parties cheveux et cou l'entourant, et qui peut être adaptée à la surface de la carte de façon à fournir un modèle partiellement en trois dimensions du visage dans lequel le visage possède des contours correspondant aux caractéristiques de visage et dans lequel les cheveux recouvrent la zone périphérique plane,
au moins une coordonnée définie par l'utilisateur qui définit dans le modèle l'emplacement à l'intérieur du maillage 3D d'une partie d'une caractéristique faciale, et
au moins une caractéristique faciale qui se situe sur la carte dans une position définie par la coordonnée définie par l'utilisateur.

16. Un procédé de production d'un modèle 3D partiellement animé d'une tête destiné à un affichage sur un écran d'affichage **caractérisé par** les opérations suivantes :
la sélection (41) d'une carte possédant une surface partiellement en trois dimensions définie sous la forme d'un maillage de noeuds interconnectés, chaque noeud étant situé sur la surface et des groupes de noeuds définissant des polygones qui à leur tour définissent les contours de la surface, la surface se trouvant généralement dans un plan unique dans zone périphérique et étant surélevée de ce plan dans une zone centrale correspondant à la topologie d'un visage,
la sélection (42) d'une image en deux dimensions d'une tête/visage qui est vue de face et qui comprend un visage, une partie cheveux et cou l'entourant,
l'ajustement (43) de l'image sur la surface de la carte de façon à fournir un modèle partiellement en trois dimensions du visage, dans lequel le visage possède des contours correspondant aux caractéristiques du visage et dans lequel les cheveux recouvrent la zone périphérique plane,
la sélection (45, 47), à partir d'une structure de données, d'au moins une coordonnée définie par l'utilisateur qui définit l'emplacement à l'intérieur du maillage d'une partie d'une caractéristique faciale dans le modèle, et
la sélection d'au moins une caractéristique faciale (46, 48), et
la localisation de la caractéristique sur la carte dans une position définie par la coordonnée définie par l'utilisateur.

17. Le procédé selon la Revendication 16 qui comprend les opérations complémentaires de rendu du modèle défini par la structure de données sur un écran.

18. Le procédé selon la Revendication 17 dans lequel l'opération de rendu comprend la fourniture d'un modèle animé et rendu d'au moins une caractéristique faciale telle que la bouche ou les yeux, et sa localisation sur l'image adaptée affichée au niveau de la coordonnée indiquée dans la structure de données.
